(19) Europäisches Patentamt
European Patent Office
Office européen des brevets

(11) Publication number: **0 039 385**
**A2**

(12) **EUROPEAN PATENT APPLICATION**

(21) Application number: **81100798.8**

(51) Int. Cl.³: **H 04 N 7/04**

(22) Date of filing: **05.02.81**

(30) Priority: **08.09.80 IT 2452680**
**08.02.80 IT 1982580**

(43) Date of publication of application: **11.11.81**
**Bulletin 81/45**

(84) Designated Contracting States: **AT BE CH DE FR GB IT LI LU NL SE**

(71) Applicant: **FALCONI COSTRUZIONI IMPIANTI S.p.A., Via Locchi, 6, I-28100 Novara (IT)**

(72) Inventor: **Fiore, Luigi, Via Casella, 4, Roma (IT)**
Inventor: **Cappellini, Luigi, Viale Adriatico, 118, Roma (IT)**

(74) Representative: **Borella, Ada, Ing. A. Racheli & C. Viale San Michele del Carso, 4, I-20144 Milan (IT)**

(54) **Transmission of video and other signals and also of a return message by a single unshielded two-wire cable.**

(57) This invention relates to a process and relating device for transmitting through a cable a video signal from a camera unit to at least one receiver (forward signal) and a return message from said receiver to said camera unit, wherein the forward signal is transmitted using an analog modulation and may include also an audio signal. In particular the return message is pulsating transmitted by using the same unshielded bipolar cable used for the forward signal. Said return message is sent during the period at which the video signal beam is positioned on the next line, an hence, as well known, said signal is not displayed. A preferred application is concerned with a video interphone and in this case the return message includes the sample audio signal, the door opener signal, the user reply signal and a signal stopping the suply increment.

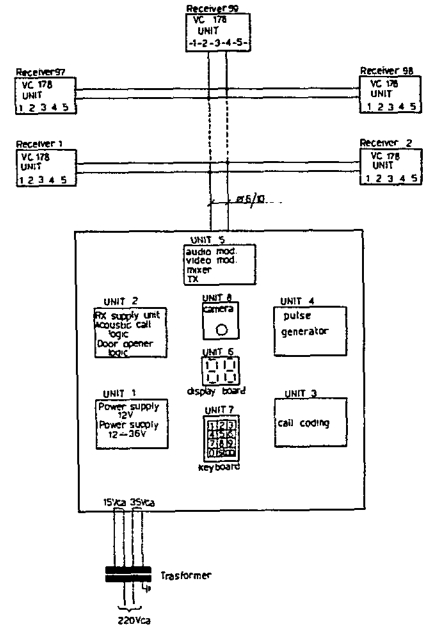


EP 0 039 385 A2

0039385

Applicant:
FALCONI COSTRUZIONI IMPIANTI S.p.A.
I - 28100 NOVARA
Via Locchi, 6

**TITLE MODIFIED**
**see front page**

"A PROCESS AND APPARATUS FOR THE TRANSMISSION OF THE VIDEO SIGNAL WITH FURTHER SIGNALS FROM A CAMERA UNIT AND A RETURN MESSAGE FROM THE RECEIVER ON A SINGLE UNSHIELDED BIPOLAR CABLE".

This invention relates to a process and relating device for the transmission of the video signal along further signals from a camera unit and a return message from the receiver on a single unshielded bipolar cable. A preferred application is concerned with a video interphone which may be used both in industrial field, such as in banks, garages and storehouses, and in private houses. However, other applications can be foreseen, such as for example concerning a closed-circuit television.

The present technique in the field of video interphones makes conventionally use of four to six signalling and supplying wires and of a shielded cable with a typical 75 ohm impedance for distribution.

Such a system implies a typical video distribution involving specifical impedance problems and signal degradation problems according to the type of cable used (losses).

Usually, a composite type of cable is sold, as especially prepared for each video interphone.

This involves supply and quality problems. Owing to their construction, the cables have rather bulky structures and require high bending radiuses (wall chases).

An installer of such systems should necessarily know the problems of video distribution, and he should also have a theoretical and practical knowledge of the video interphone art.

In the field of the existing constructions, the cables designed for interphone systems have such a diameter so as to prevent the subsequent conversion into video interphone systems. Furthermore, both in already existing houses and in new houses, the need of setting-up a pushbutton panel outdoor may arise serious problems about location and layout, problems which increase with the number of users.

It is the object of the present invention to reduce to two the connecting wires between the outside camera unit (which includes television camera, interphone and selection) and the different units of inside users, which are therefore all connected in parallel.

It is an auxiliary object to avoid the use of a coaxial cable, which involves the above mentioned disadvantages, and to allow the installation of video interphone systems by taking advantage of the already existing interphone installation cables.

The objects have been achieved by the provision of a process for the transmission through a cable of the video signal from a camera unit to at least one receiver (which will be referred to as forward signal) and of a return message from said receiver to said camera unit, wherein the forward signal is transmitted thanks to an analog modulation. Particularly, said return message is pulse transmitted, using an unshielded bipolar cable, owing to the use of the period in which the video signal beam is going to be positioned on the subsequent line (plyback period) and accordingly, as well known, said signal is not displayed. In a particular embodiment of the present invention, providing the application to video interphone field, the forward signal comprises the audio signal and video signal which are frequency modulated as well known, whereas said return message comprises the audio signal or door opener signal, or any further signal required for the connections between the camera unit, which is installed in the building porter's lodge, and the various receivers, corresponding to the various users of the video interphones. However, these processes could be also particularly applied to closed-circuit television systems, in which a connections is provided between the television cameras, which have to shoot a particular scene, and one or more monitors supplying and receiving control signals.

A process is also provided in which the return message modulation is obtained by varying the position of a fixed pulse packet relative to the center line of the video signal blanking period by an amount which is proportional to the message which is to be trasmitted. Thus, a suitable means is provided for the transmission of said message.

A particular process implemented by the apparatus according to the present invention provides that the camera unit should supply the voltage for the receiver feed. Since said supply voltage provided by the camera unit should compensate for the line drops depending on the distance of the selected receiver, it is foreseen that such a voltage is varying and that the receiver controls the value required for its operation. In this embodiment provision is made for an increasing ramp generator, the value of which is stopped at the level reached at the instant the receiver starts to transmit a return message.

Therefore, an apparatus for carrying out the above described processes comprises, in addition to the above mentioned camera unit and connected receiver, a message processor including an oscillator, which is synchronized by the video signal and supplies a samble of the return message at each synchronization pulse (plyback) of said video signal.

Furthermore, in a particular embodiment of the present invention, it is provided that the camera unit has its local oscillator switched off, but it is instead synchronized by an outside quartz clock which directly drives the final field scan and horizontal sweep circuits.

Similarly, owing to the provision of the external quartz clock, the receiver can not include the oscillators for the field scan and horizontal sweep, which are directly provided by the video synchronism from the camera unit as synchronized by the outside quartz clock. It is also provided that the camera unit also suitably processes the video signal, so that the information of horizontal sweep are supplied also during the period of field scan, which usually does not include said information.

Additionally, said receiver comprises a non-linear device, such as a threshold circuit which is responsive to the supply voltage value and is capable of providing a gate pulse which enables the return message transmission.

An embodiment of such an apparatus will now be explained with reference to the accompanying drawings, in which:

Fig. 1 is a general block diagram of the outside camera unit;

Fig. 2 is a block diagram of the circuit of supply unit;

Fig. 3 is the electrical diagram of the unit of Fig. 2;

Fig. 4 is a block diagram for the call coding unit (UNIT 3);

Fig. 5 is the electrical diagram for the unit shown in Fig. 4;

Fig. 6 is the block diagram for the pulse generating unit (UNIT 4);

Fig. 7 is the electrical diagram for the unit shown in Fig. 6;

Fig. 8 is the block diagram for the audio and video mixing-transmitting unit (UNIT 5);

Fig. 9 is the electrical diagram for the unit shown in Fig. 8;

Fig. 10 is the block diagram for the receiver;

Fig. 11 is the electrical diagram for a first portion of Fig. 10;

Fig. 12 is the electrical diagram for a second portion of Fig. 10 with the exclusion of the circuit relating to the handset;

Fig. 13 is the circuit diagram for the transmission of the return message;

Fig. 14 shows the processing of the signals for the transmission of the return message;

Fig. 15 is the general diagram of the apparatus with the relative location of the various units; and

Fig. 16 shows the processing of the video signal into composite video signal.

First referring to Figs. 2 and 3, it will be seen the logic unit herein shown provides the following functions:

(A.1) supply logic;

(A.2) return message demodulation;

(A.3) audio amplification;

(A.4) acoustic call logic;

(A.5) door opener logic.

The term "return message" is herein referred as the whole of information provided by the receiver, and including the sampled audio signal, the signal stopping the supply increment, the door opener signal and the user reply signal.

For a better understanding of the circuit operation, it wofld be advisable to refer to the event sequence.

(A.1) Upon selection of the desired receiver, which process occurs in accordance with any of the known manners, the information of effected selection arrives from the call coding fnit (UNIT 3) through the pin 15 (see description of UNIT 3). This causes the gates 1 and 2 of IC1 to be closed, enabling the passage of the clock 50 Hz to the two binary counters IC2 and IC3.

These counters provide for generating a stepwise type of control voltage through the set of resistances R4 to R12, which step waveform is caused to be outputted from the pin 7 and supplied to the power supply (UNIT 1). At the output of this power supply a voltage vvalue will be provided as directly proportional to said control voltage. When the receiver supplies the return pulse carrier, the flip-flop 4 of IC7 is switched over, shutting off the count which stops at the attained level. In case, should there be no answer from the receiver, the gate NOR 1 of IC4 would provide for resetting the timer in UNIT 4 at the end of an entire ramp of step waveform, that is after about 4 sec.

(A.2/A.3) As to the return message demodulation, which takes place in UNIT 2, a known demodulation process can be used.

By mere way of example, in Fig. 3 there is shown a linear ramp demodulation circuit, but any type of PPM pulse demodulation can be used.

The resulting waveform is picked up by P2 and amplified by IC 13 driving the loudspeaker. At this last stage, an input is also present for amplifying the repetition of the low-frequency call note.

(A.4/A.5) Returning to the event sequence from the end of point (A.1), as soon as supply is switched, the flip-flop 1 of IC7 is switched over releasing, by an enabling signal being supplied through pin 14, the telephone rate type of call available in UNIT 4. Such a situation will last until a stop signal arrives, that is until a further switching of flip-flop 1 is caused. This may occur owing to two reasons, namely: (a) the 50 Hz low frequency pulse at narrow useful cycle as supplied by the receiver is no longer available (which event corresponds to the user's reply). Sai pulse, by being synchronous with the 50 Hz picked off by UNIT 4, is compared therewith by IC10, which supplies the release when coincidence is no longer existing; (b) the door opener pulse (50 Hz at wide useful cycle) is available and recognized by IC11, which behaves as an actual period counter; when the useful cycle exceeds a predetermined value, said IC11 will provide the gating signal for energizing the door opener relay and stopping the call.

The integrated circuit IC12 operates as a clipper-mitier the 50 Hz low frequency reply from the receiver.

The unit also has a noise suppressing (muting) device to avoid any amplification of possible 50 Hz low frequency return and production of noise.

Unit 3 (UNIT 3) relating to call coding will be explained with reference to Figs. 4 and 5.

This part serves the purpose of providing for visitor-camera unit interface, that is the call execution of the desired inside receiver.

The decimal type of keyboard is translated into BCD language by IC1, IC2 and IC3; the BCD information is temporarily stored by IC8, while the information of IC9 is transferred to IC10. After such a transfer, the information of IC8 finally passes to IC9. Thus the transfer is obtained for the first digit set by units to tens and the storing of the second digit as unit (so that a number up to 99 can be set). This because the set number can have one or two digits, and the apparatus is unable of recognizing beforehand whether the set number is a unit or a ten.

IC13 provides protection against bounces due to mechanical switching of the keyboard and also provides the sequence of pulses to obtain the above described shift effect.

After setting of the digit or digits and after about two seconds, the unloading of the two counters IC9 and IC10 is started which, on arriving at zero according to a decreasing sequence from the set number, are capable of providing a stop after the number of pulses which correspond to the receiver.

The counter unloading pulses are effective on the power supply which, initially at 12V, is shut off for about one tenth of a second for a number of times corresponding to the called number. Since the various receivers are parallel connected and provided with decimal count logics which, initially cleared, increase by as many steps as the pulses, at the count end the resulting pause enables a comparison between the number attained by the counters and that number which is programmed and stored in each of said counters.

However, the information relating to the called number is retained as stored during the entire call or connection period in registers IC11 and IC12 and displayed by led digits. Such digits are switched off at the time when the call note is present, that is one second out of four, while being switched on for the whole call or connection period. When no call or utilization is operating, the digits show a double zero at the output.

As output on pin 8, said circuit supplies the count pulses directed to UNIT 1 (power supply) and on pin 3 the count end information directed to UNIT 2, which has been previously described.

It is important to note that whichever key is pressed, such a key will control the timer start (provided on UNIT 4), and that the total count of the timer will begin from the instant the last key is pressed, this because it is always possible to set at any time a new call or connection, which would clear out that connection that was eventually in course.

Unit 4 (UNIT 4), relating to the pulse generator, will now be described with reference to Figs. 6 and 7.

This units supplies all of the synchronisms for the apparatus operation; and accordingly is the central member of the apparatus.

The implication of the integrated circuits for the various outputs is described.

(B.1) Output 443 kHz (pin 5) IC3-IC11

(B.2) Output 15611 Hz (pin 4) IC1-IC3-IC14-IC15-IC16

This output is the horizontal sweep for directly driving the relative sweeping circuit of the television camera.

(B.3) Output 50 Hz (pin 3) IC1-IC2-IC3-IC14-IC15-IC16-IC17

This output is the field scnm for directly driving the field scan circuit of the television camera.

(B.4) Sync. code (pins 7, 8, 9, 10) IC1-IC2-IC4-IC5-IC6-IC7-IC8-IC9-IC12-IC14-IC15-IC16-IC17-IC18-IC19.

The Sync. Code according to the above point (B.4) is required for the synchronized of the horizontal sweep in the field scan interval, thus providing a composite signal which allows to remove the oscillator for the horizontal sweep (sync.) in the receiver.

In Fig. 16 the various outputs at pins 7, 8, 9 and 10 are shown. Moreover, at part (a) a video signal example is shown at the output from a television camera, whereas at part (b) the composite video signal appears as obtained by the processing of the synchronisms of pins 7, 8, 9 and 10 with the video signal through the processor of UNIT 5 (see C.3).

In the unit provision is also made for two programmable devices relating to the timer (IC20-IC10-IC9-IC18) and to the number of the call rings (IC12-IC13-IC17-IC1-IC3).

The unit 5 (UNIT 5) relating to the audio-video mixer will now be explained with reference to Figs. 8 and 9.

This unit performs the functions of modulating and transmitting the audio and video information. The unit comprises six functional blocks, that is to say:

(C.1) Low frequency preamplifier with ALC
(C.2) 460 kHz audio frequency modulator
(C.3) Video processor
(C.4) 4,43 MHz video frequency modulator
(C.5) Mixer
(C.6) Transmitter

(C.1) - The integrate circuit IC1 performs the task of picking off and amplifying the low frequency from the microphone; in such a device IC1 there is provided an automatic control device for the output level thus avoiding the occurrence of overmodulations.

(C.2) - The audio modulator is composed of IC6-IC7-IC8-IC9; the 15611 Hz line frequency is divided by 2 and then multiplied by 59, so as to obtain for each video transmission line 29.5 sinusoids for the audio carrier. This means that between one line and the next there is a phase displacement of 180° for the audio carrier, whereby any disturbance of this last carrier on the screen is attenuated by the grid being developed. Thus, the disturbance effect due to the two audio and video carriers is minimized, since the resulting colour, the grey, is scarcely visible to the eye. Therefore, a 460 kHz square wave frequency appears on pin 4 of IC7, which is made sinusoidal by coil L5.

(C.3) - The signal from the television camera is loaded with its closing impedance and pre-emphasized by set R13-C9; while the quadruple analogue switch IC2 provides for resetting the video signal by inserting the composite sync. signal in the field scan interval and giving thereto a D.C. level corresponding to the grey. This means that in the absence of the signal from the television camera on pins 2, 3, 9 and 10 of IC2, a grey will appear, which is the base signal, on which the actual video signal supplied by the television camera is superimposed. Said signal is then separated by the transistor $Q_2$ and fed to the modulator.

The carrier, on which the video signal is modulated, has been selected at the frequency of 4.43 MHz and is a compromise between the requirement of a sufficient video bandwidth and a reduced attenuation as to the transmission line comprising the unshielded bipolar cable.

(C.4) - The D.C. level for the so-processed signal, is established on the base of transistor $Q_4$ by the phase comparator of IC4, comparing the frequency generated by IC3 and divided by 10 by IC5 and the reference frequency of 4.43 kHz from UNIT 4 through pin 5; thus, such a D.C. level causes the oscillator comprising IC3 to operate at about the operating frequency selected at 4.43 MHz. The square wave on pin 11 of IC3 is made sinusoidal by L4.

(C.5) - The two frequencies generated by the modulators are divided and mixed by R46 and R50 and are then made symmetrical by $Q_7$ and $Q_8$.

(C.6) - The two similar units or sets $Q_{10}$ and $Q_{11}$ provide for powering and injecting the transmission frequencies in the line.

The receiver unit will now be explained with reference to Figs. 10, 11 and 12.

Such a unit comprises several blocks performing the following functions:

(D.1) - audio and video demodulation

(D.2) - video signal processing for the drive of the field scan and horizontal sweep circuit

(D.3) - processing and transmission of the return message

(D.4) - measurement of the supply voltage.

(D.1) - As above mentioned, the video and audio signals are sent frequency modulated by the camera unit. In this particular embodiment, the carriers of 460 kHz for the audio signal and 4.43 MHz for the video signal have been selected. In a vell known manner, these carriers are filtered and demodulated in the receiver. Particularly, for both of such carriers the coincidence demodulation system is used. In Fig. 11 the demodulation of the audio signal is carried out by the integrate circuit IC7 (which in this embodiment is the TBA 120 S), while the video signal demodulation is obtained through the integrate circuit IC6 (also a TBA 120 S). Since the integrate circuit used is provided for a narrow band operation, expedients are taken for widening out said band. In these embodiments, the components having the following values have been used:

| | |
|---|---|
| C8-470 pF | R9-4.7 Kohm |
| C9-470 pF | R10-4.7 Kohm |
| C11-0,1 μF | R11-4.7 Kohm |
| C12-0,1 μF | R12-1 Kohm |
| C13-0,1 μF | R13-1 Mohm |
| C14-56 pF | R14-4.7 Kohm |
| C16-3.3 μF | R15-47 Kohm |
| C17-3.3 μF | R16-47 Kohm |
| | R17-470 ohm |
| | R18-100 ohm |
| | R19-4.7 Kohm |

The abbreviations indicate the following components:

L1-F201-two-winding coil with secondary tuned at 4.43 MHz

L2-F201

Q3-BC 107

(D.2) - Referring to Fig. 11, the integrate circuit IC6 at pin 8 provides the composite video signal. Said signal is amplified by transistor $Q_3$ and fed to the pin 4 of IC6, obtaining the separate sync. signals on pin 3. These sync. signals are processed by a monostable multivibrator. In this particular embodiment the monostable multivibrator is represented by IC13, which is a CMOS 4093 with input at pin 1.

At the output of said monostable multivibrator (pin 3 of IC13) the driving pulses for the horizontal sweep are provided. Thus, the horizontal sweep is substantially driven by the quartz clock available in the outside camera unit.

On the other hand, the field scan is provided by the diagram part shown in Fig. 12. Particularly, the signals avilable on pins 3 of IC6 and IC13 (Fig. 11) are supplied to the input of an OR gate (pins 1 and 2 of IC201 of Fig. 12) and processed by IC204, the latter outputting from pin 4 a pulse for generating the sawtooth signal which, amplified by IC206, drives the field scan.

(D.3) - In the receiver the processing occurs for the horizontal sweep signal which serves the purpose of transmitting the return message at a phase of the video signal such as not to display the disturbance of the screen of the cathode-ray tube.

Substantially, at each second 15611 packets of 8 pulses at the frequency of 1 MHz are transmitted, each of which has a position relative to the horizontal sweep (sync.) signal that is farther displaced as wider is the amplitude of the low frequency message which at that instant is supplied as a return.

The start for the transmission supply of the carrier occurs just when the supply voltage reaches a predetermined value, as it will be seen at point D.4 V The circuit diagram for the transmission of the return message is shown in Fig. 13, whereas the processing of the horizontal sweep (sync.) for such a transmission is shown in Fig. 14.

Thus, by frequency modulating Ø, , the result is obtained that Q7=RESET moves in advance or delay according to the modulant with resepct to the horizontal sweep (sync.). Accordingly, also $\left[\,\overline{(Q_4 + Q_5)} \cdot Q_6\right] \cdot \emptyset$ generating a train at 999,125 Hz (about 1 MHz), which is pulse-position modulated relative to the horizontal sweep (sync.) signal.

By supplying as low frequency modulant the 50 Hz signal with narrow useful cycle or wide useful cycle, a code is provided generating the call stop and door opener information, respectively (to this end, see points A.4 - A.5).

(D.4) - Each of the receivers requires a specific supply which in this embodiment is provided by the camera unit through the unshielded connecting bipolar cable. Voltage drops occur along said cable, depending on the distance of a receiver from the camera unit.

At point A.1 it was pointed out that following the selection said camera unit supplies on the line an increasing supply (particularly a ramp voltage from 1/V to 36V), which at a predetermined value is stopped by a signal supplied by the receiver.

Therefore, a device is provided in the receiver, which device provides for measuring the supply voltage and supplying a gate signal when said supply has attained the required level. Said device is shown in Fig. 12. It comprises the IC 207 circuit (which in this particular embodiment is a CMOS 4093). Said circuit is a trigger circuit, the threshold of which is set to be operative when at the receiver input (input 9) there is a supply voltage sufficient for its operation (in this case a 15V voltage).

The logic gate level is then supplied to the pin 8 of IC 14 of Fig. 13, thus starting the transmission of the return message packets from the receiver to the camera unit. The provision of said packets constitutes the signal stopping the supply increment, stabilizing it at the attained value.

The present invention can be carried into effect with all of the variations that would appear as evident to those skilled in the art.

Applicant:
FALCONI COSTRUZIONE IMPIANTI S.p.A.
I - 28100 NOVARA
Via Locchi, 6

C L A I M S

1. A process for transmitting through a cable a video signal from a camera unit to at least one receiver (forward signal) and a return message fron said receiver to said camera unit, wherein the forward signal is transmitted using an analog modulation, characterized in that said return message is pulsating transmitted by using an unshielded bipolar cable during the period at which the video signal beam is positioned on the next line, and hence, as well known, said signal is not displayed.

2. A process according to Claim 1, characterized in that said forward signal also comprises audio signal which is transmitted using an analog modulation.

3. A process according to Claim 1 or Claim 2, characterized in that the modulation for the return message is provided by varying the position of a fixed packet of pulses relative to the center line of the blanking period for the video signal by an amount proportional to the message to be transmitted.

4. A process according to any of the preceding Claims, characterized in that the supply power is supplied according to an increasing rate until the receiver supplies a signal stopping the supply increment and stabilizing it at such an attained value.

5. A process according to Claim 4, characterized in that said signal stopping the supply increment is constituted by the transmission of samples of the reply message.

6. An apparatus for carrying out the processes according to Claims 1 to 5, comprising a camera unit and at least one receiver which are connected through a transmission cable, characterized in that said transmission cable is an unshielded bipolar cable and that said receiver comprises a message processor (IC11, IC12, IC13, IC14) including an oscillator synchronized by the video signal, said processor supplying a sample of the return message at each horizontal sweep from said camera unit.

7. An apparatus according to Claim 6, characterized in that the synchronization for the camera is provided by an outside quartz clock directly driving the field scan and the horizontal sweep circuits without using any local oscillator.

8. An apparatus according to Claim 6, characterized in that the receiver has no oscillators for the field scan and the horizontal sweep, which are directly provided by the suitably amplified video synchronism signals, a processing of the video signal being provided in the camera unit (IC2, IC15, IC16, IC17, IC18, IC19) which supplies the horizontal synchronism signal also during the field scan.

9. An apparatus according to Claim 6, characterized in that the receiver comprises a non-linear device responsible to the supply voltage (IC207, D211, D209) which device provides a gating signal for the transmission start of the return message.

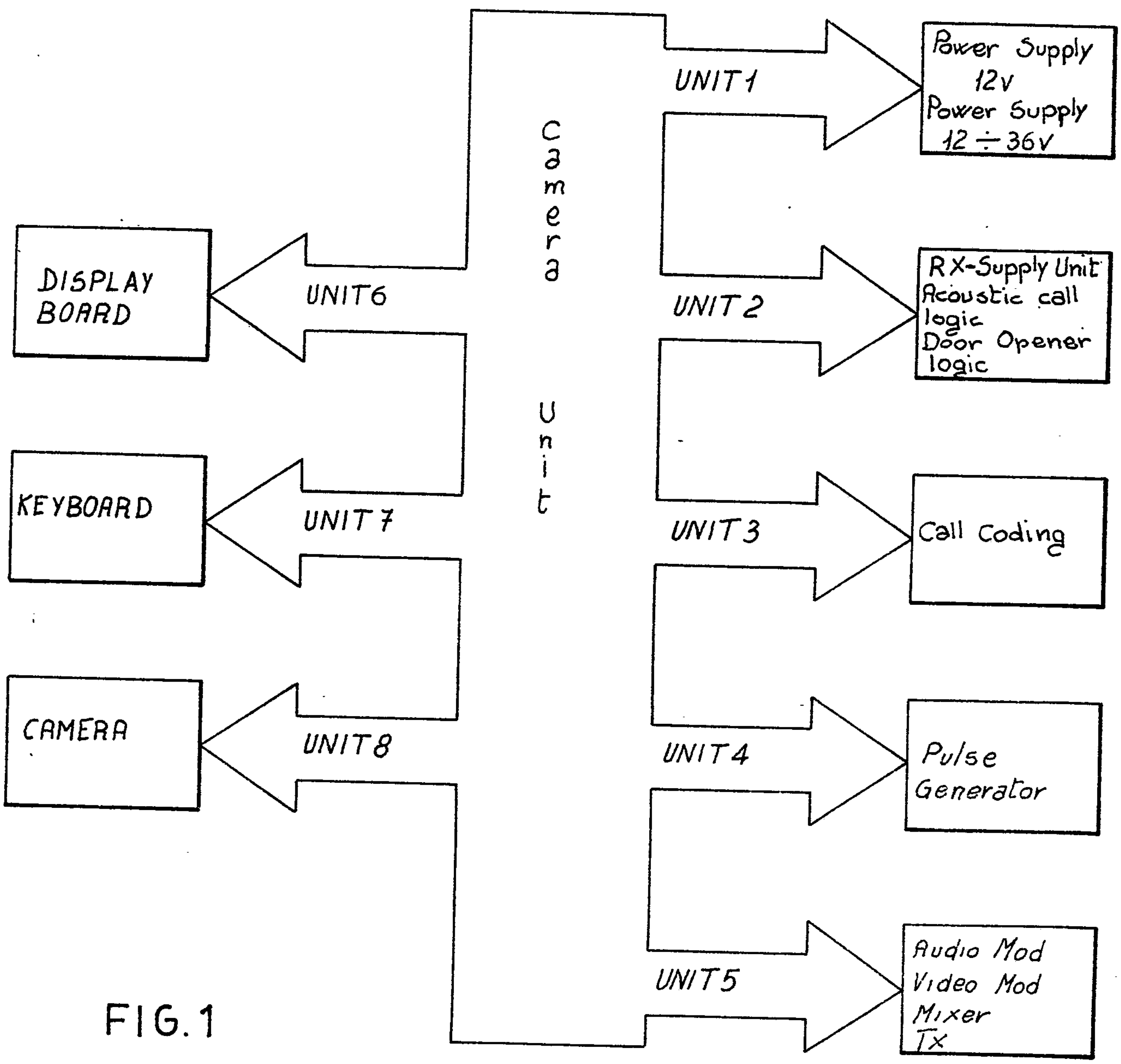
DISPLAY BOARD
KEYBOARD
CAMERA
UNIT6
UNIT7
UNIT8
Camera Unit
UNIT1
UNIT2
UNIT3
UNIT4
UNIT5
Power Supply 12v
Power Supply 12 ÷ 36v
RX-Supply Unit
Acoustic call logic
Door Opener logic
Call Coding
Pulse Generator
Audio Mod
Video Mod
Mixer
Tx

FIG. 1

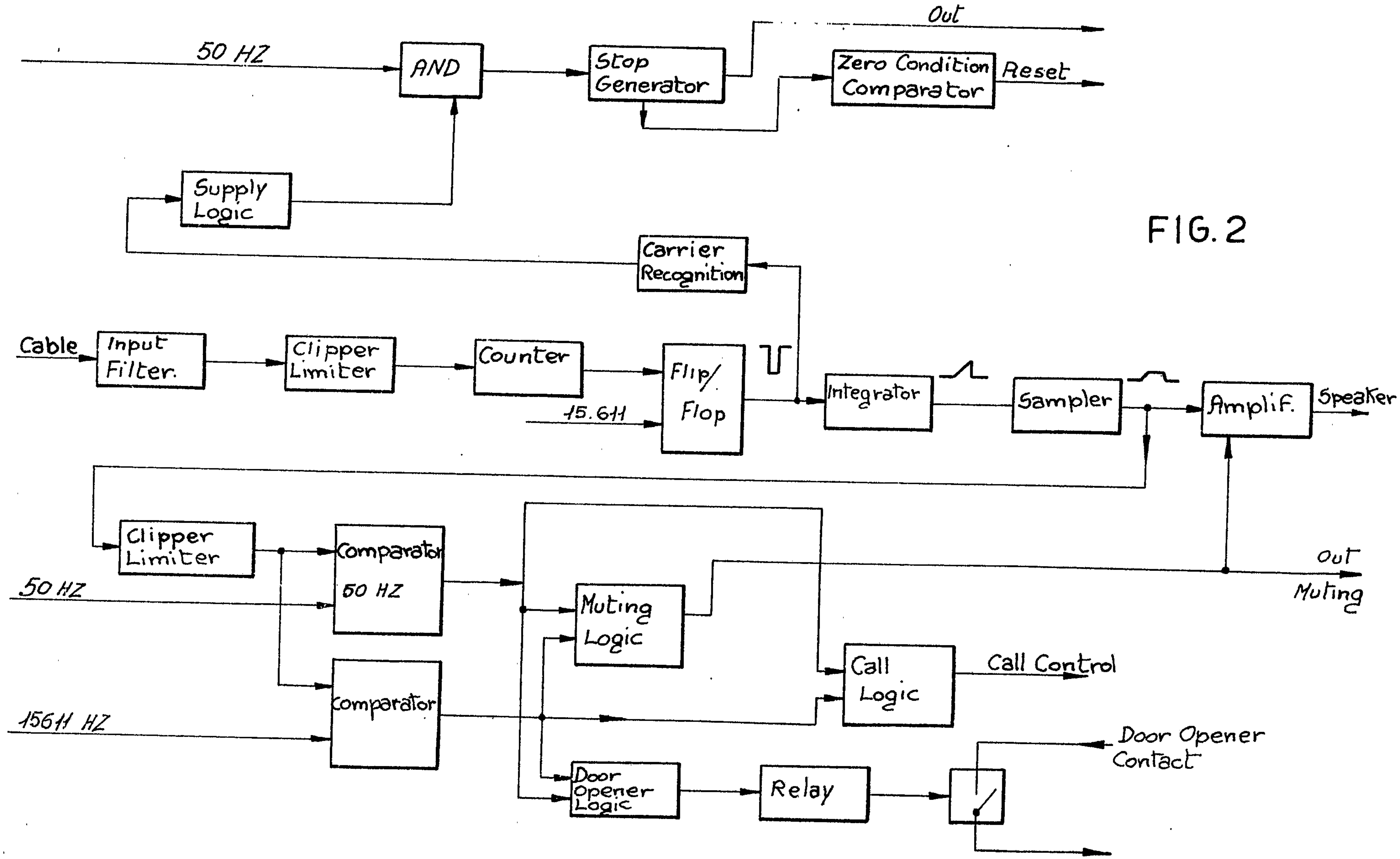
50 HZ
AND
Stop Generator
Out
Zero Condition Comparator
Reset
Supply Logic
Carrier Recognition
Cable
Input Filter.
Clipper Limiter
Counter
Flip/Flop
15.611
Integrator
Sampler
Amplif.
Speaker
Clipper Limiter
Comparator 50 HZ
50 HZ
Comparator
15611 HZ
Muting Logic
Out Muting
Call Logic
Call Control
Door Opener Logic
Relay
Door Opener Contact

FIG. 2

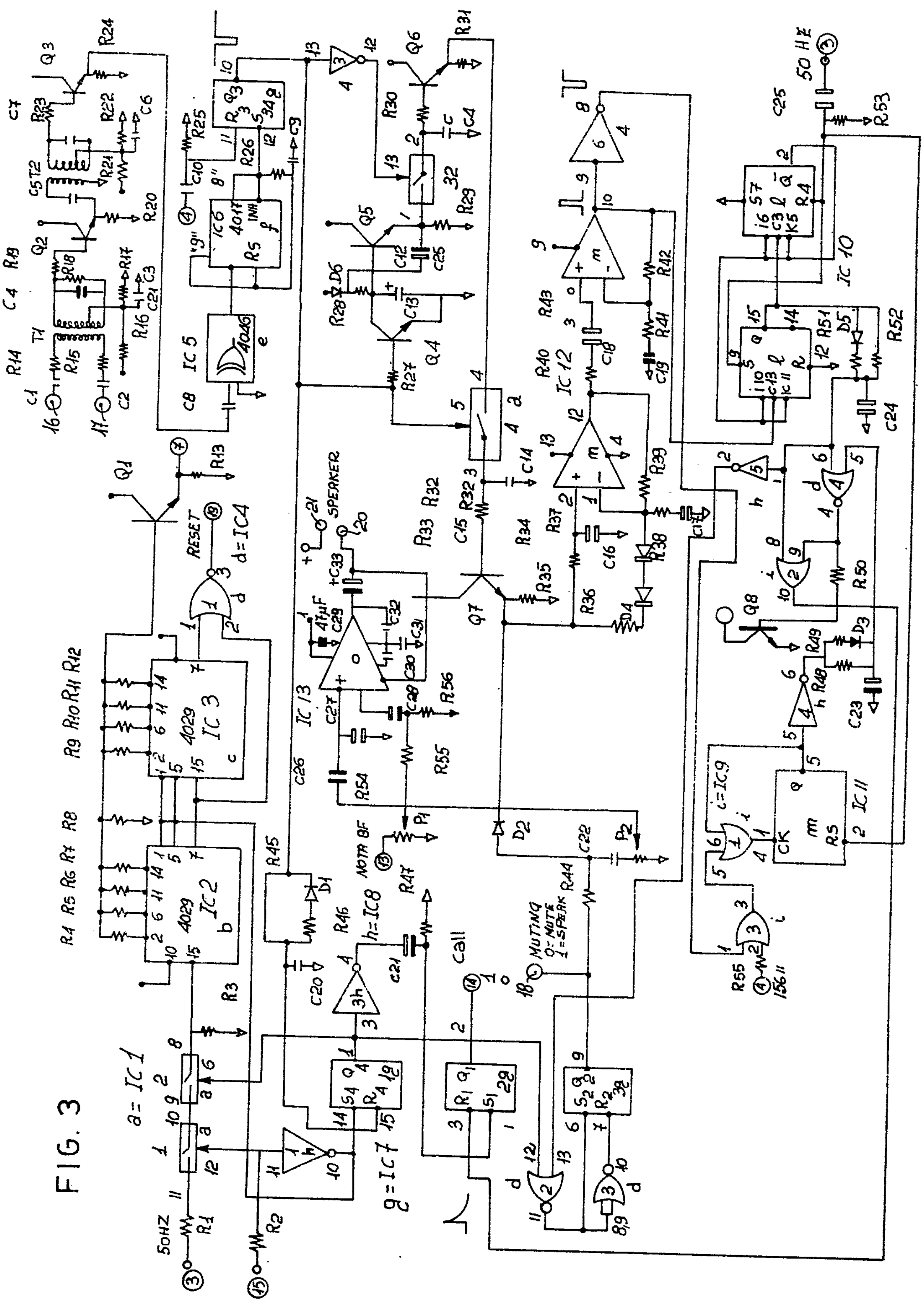
RESET
d=IC4
SPEAKER
NOTR BF
MUTING
0: MUTE
1=SPEAK
Call
50HZ
50 HZ
IC 1
IC 2
IC 3
IC 5
IC 6
IC 10
IC 11
IC 12
IC 13
a= IC 1
g=IC 7
h=IC 8
c=IC 9

FIG. 3

FIG. 4

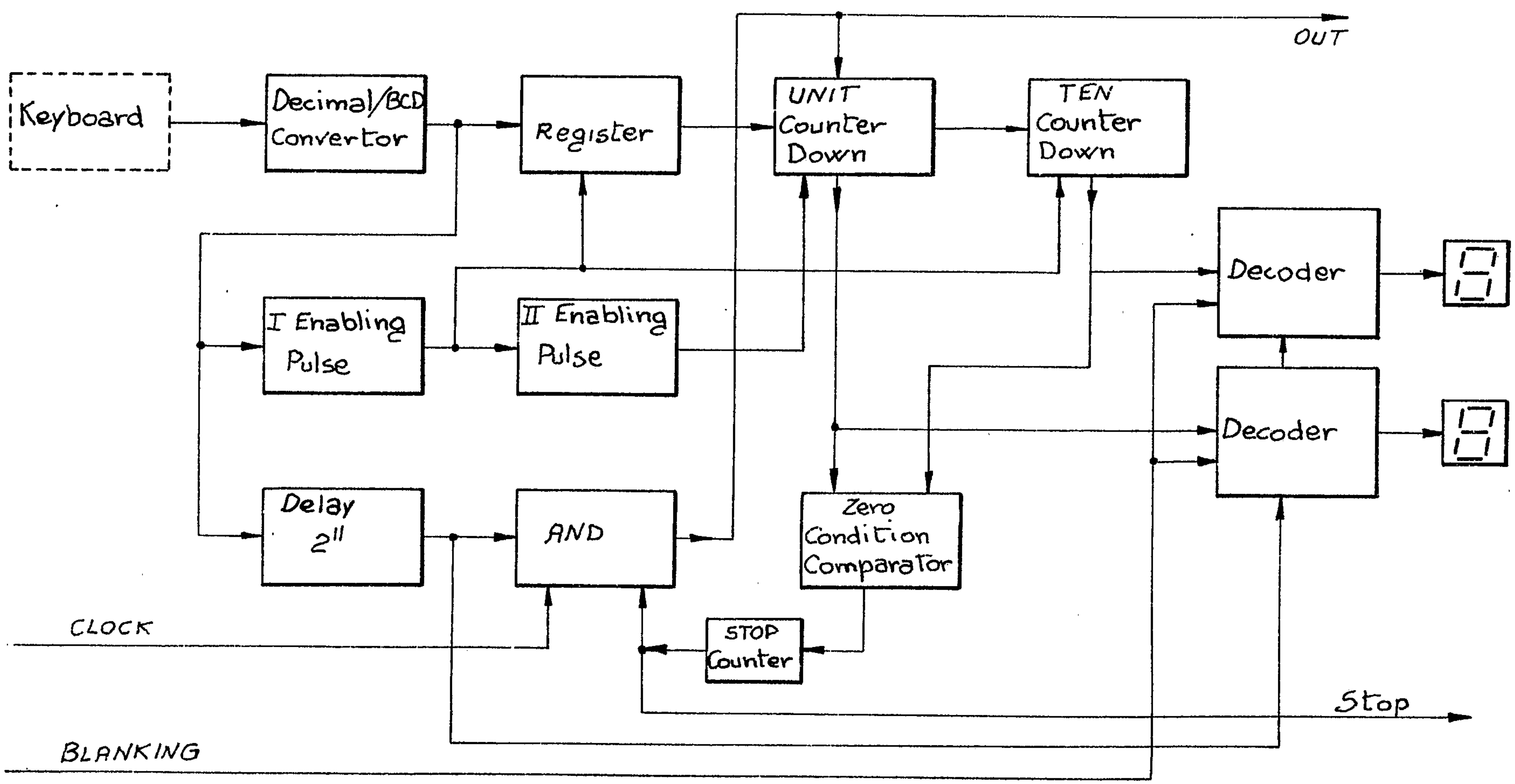
Keyboard
Decimal/BCD Convertor
Register
UNIT Counter Down
TEN Counter Down
OUT
I Enabling Pulse
II Enabling Pulse
Decoder
Decoder
Delay 2''
AND
Zero Condition Comparator
STOP Counter
CLOCK
Stop
BLANKING

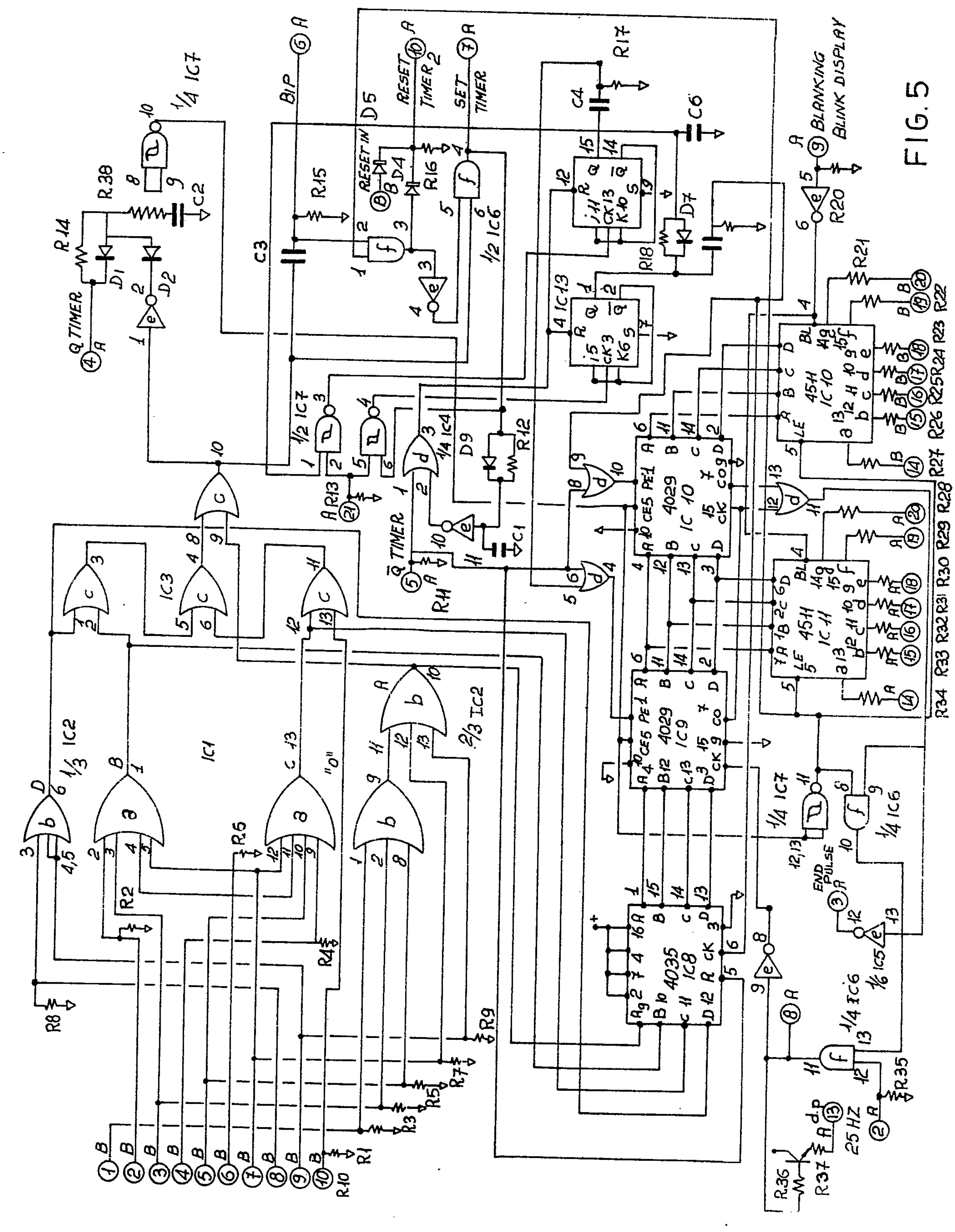
BLANKING
BLINK DISPLAY
RESET TIMER 2
SET TIMER
Q TIMER
END PULSE
25 HZ
4029
4035
IC1
IC2
IC3
IC4
IC5
IC6
IC7
IC8
IC9
IC10
IC11
IC13

FIG.5

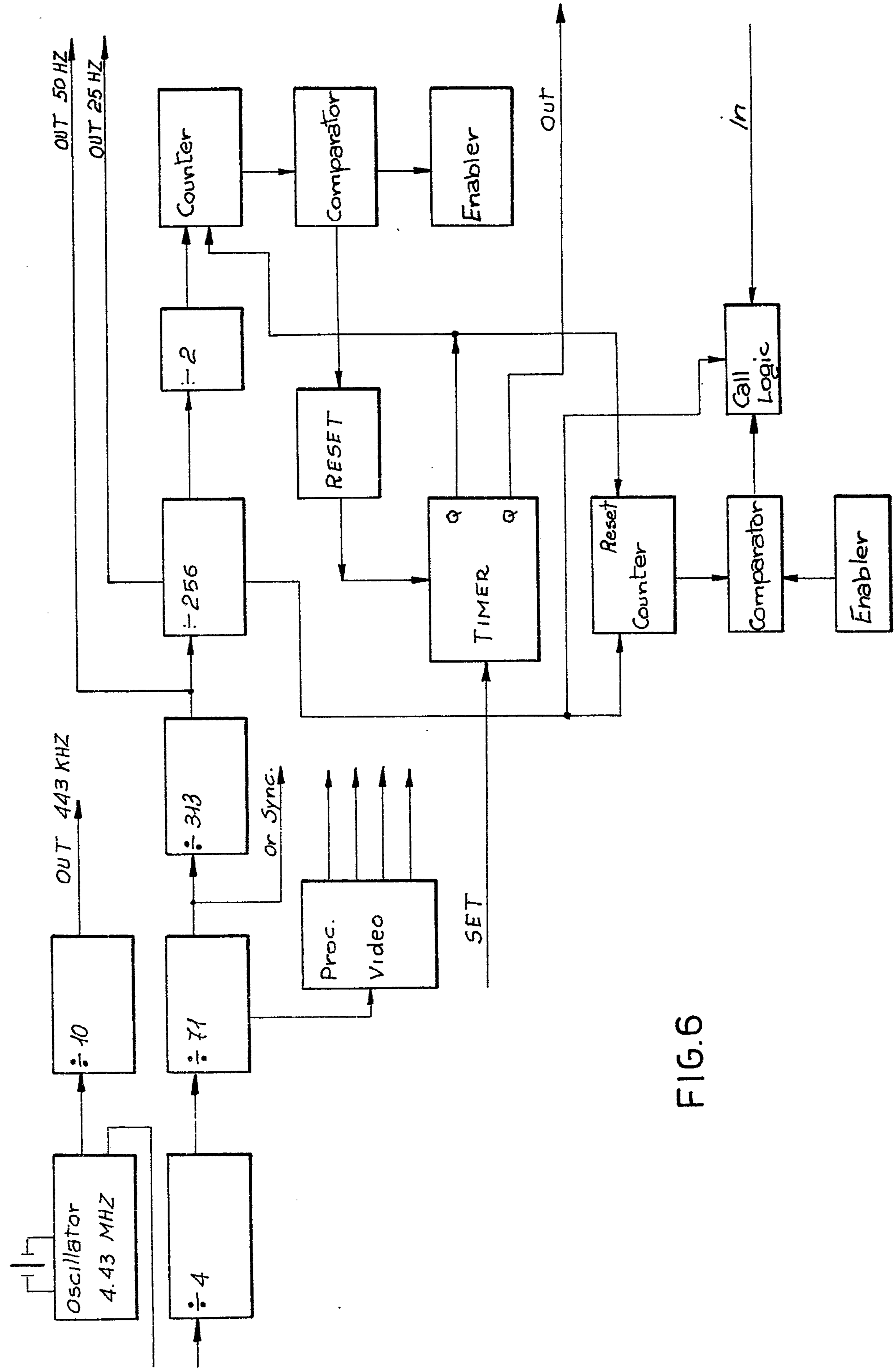
Oscillator
4.43 MHZ
÷ 10
OUT 443 KHZ
÷ 4
÷ 71
÷ 313
Or Sync.
Proc.
Video
÷ 256
OUT 50 HZ
OUT 25 HZ
÷ 2
Counter
Comparator
Enabler
RESET
SET
TIMER
Q
Q
Out
Reset
Counter
Comparator
Enabler
Call
Logic
In

FIG.6

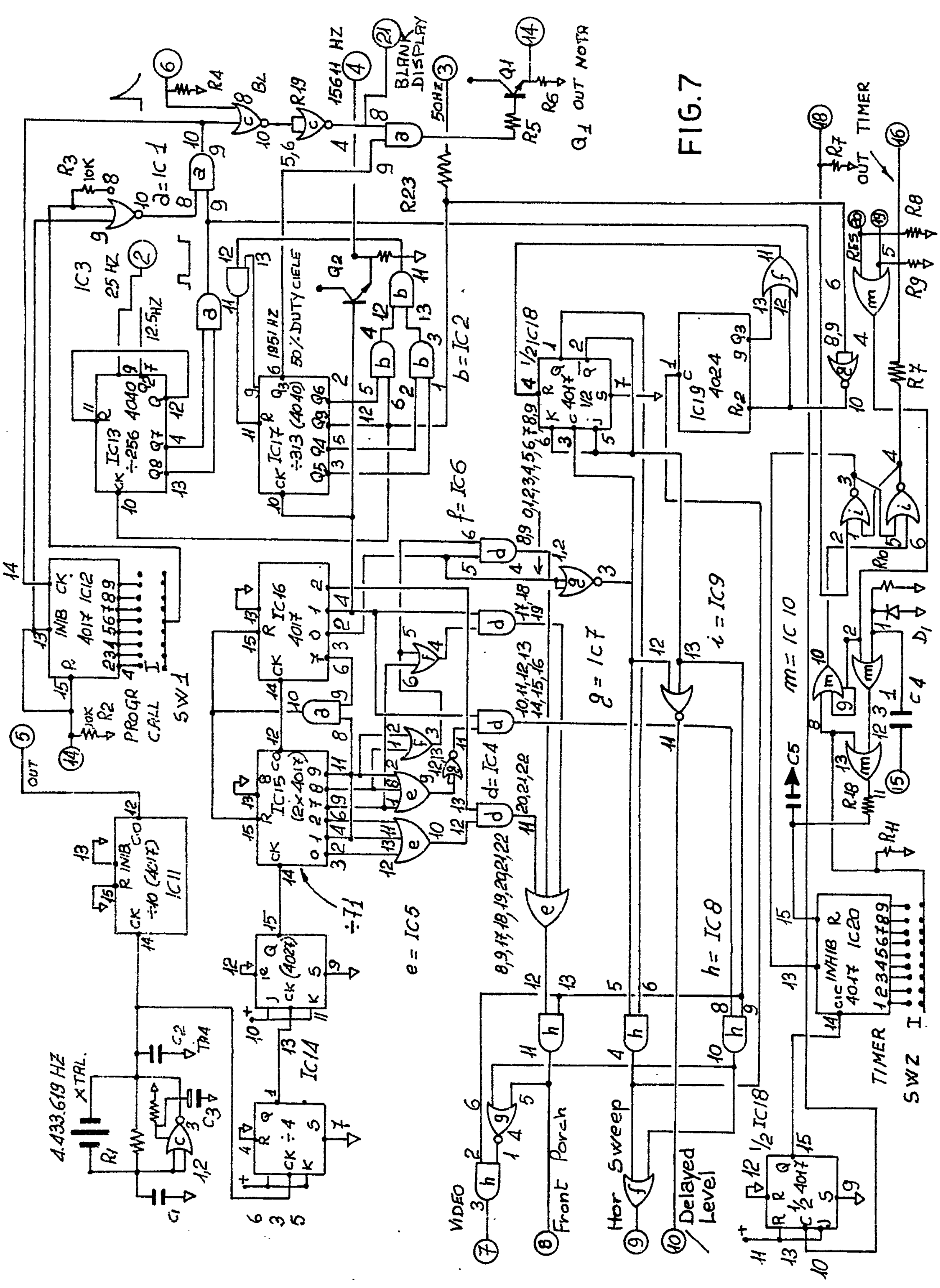

FIG.7

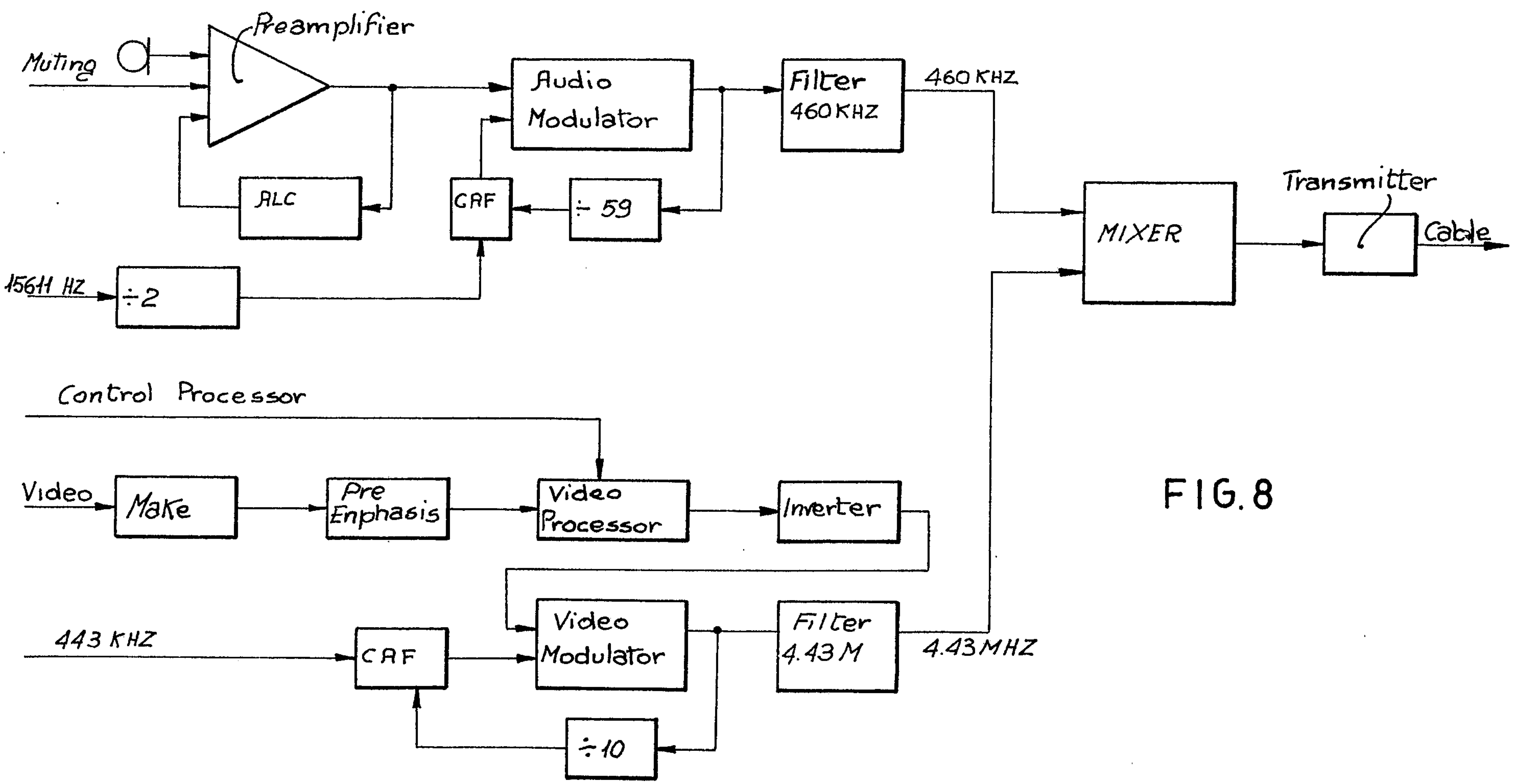
Preamplifier
Muting
ALC
Audio
Modulator
CAF
÷ 59
Filter
460 KHZ
460 KHZ
15611 HZ
÷2
MIXER
Transmitter
Cable
Control Processor
Video
Make
Pre
Enphasis
Video
Processor
Inverter
443 KHZ
CAF
Video
Modulator
Filter
4.43 M
4.43 MHZ
÷10

FIG. 8

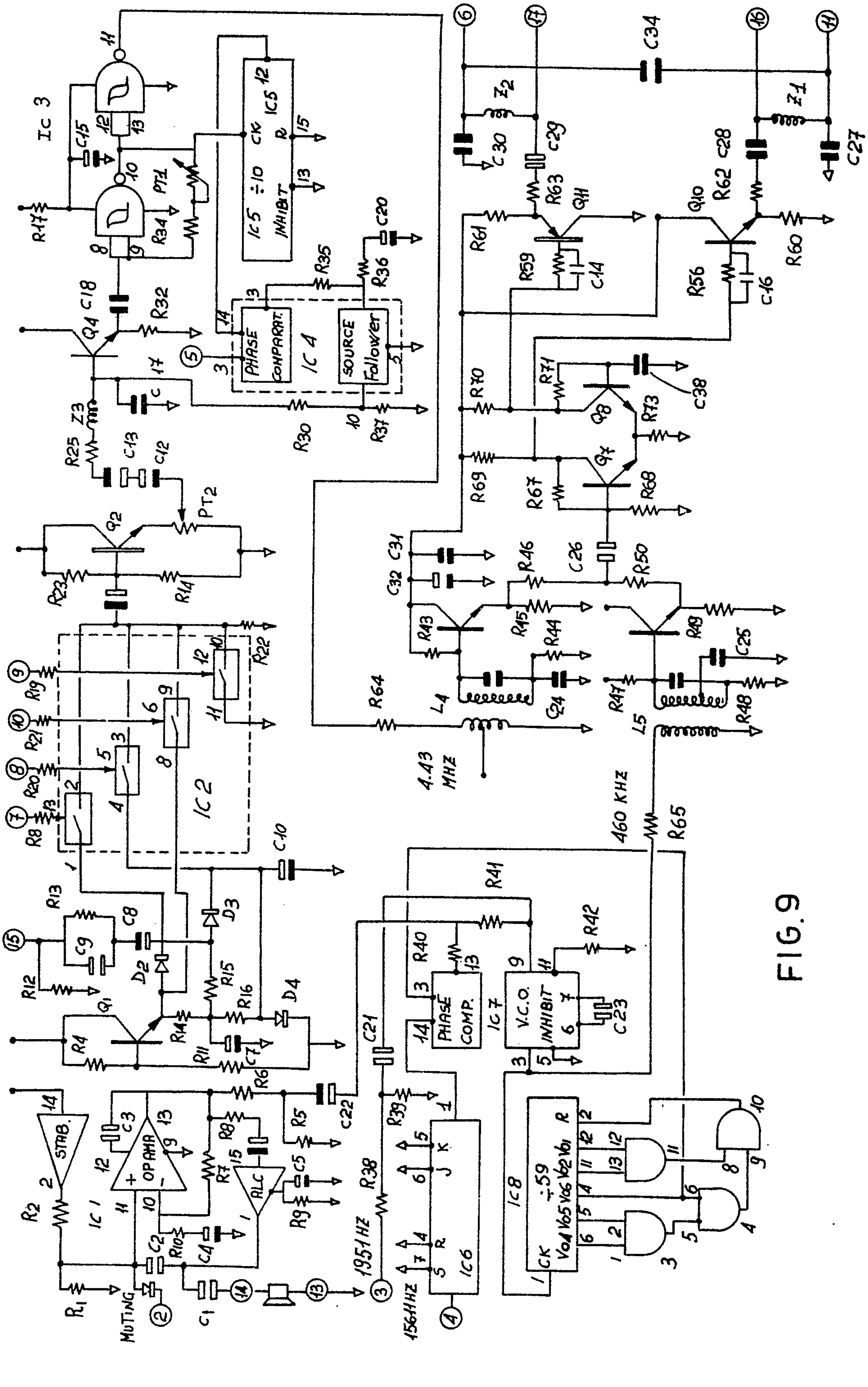
IC 1
OPAMP
STAB.
ALC
IC 2
Ic 3
IC5 ÷10
INHIBIT
PHASE COMPARAT.
SOURCE Follower
IC 4
PHASE COMP.
IC 7
V.C.O. INHIBIT
IC 6
IC 8
÷59
MUTING
1951 HZ
15611 HZ
4.43 MHZ
460 KHZ

FIG.9

10/16
0039385

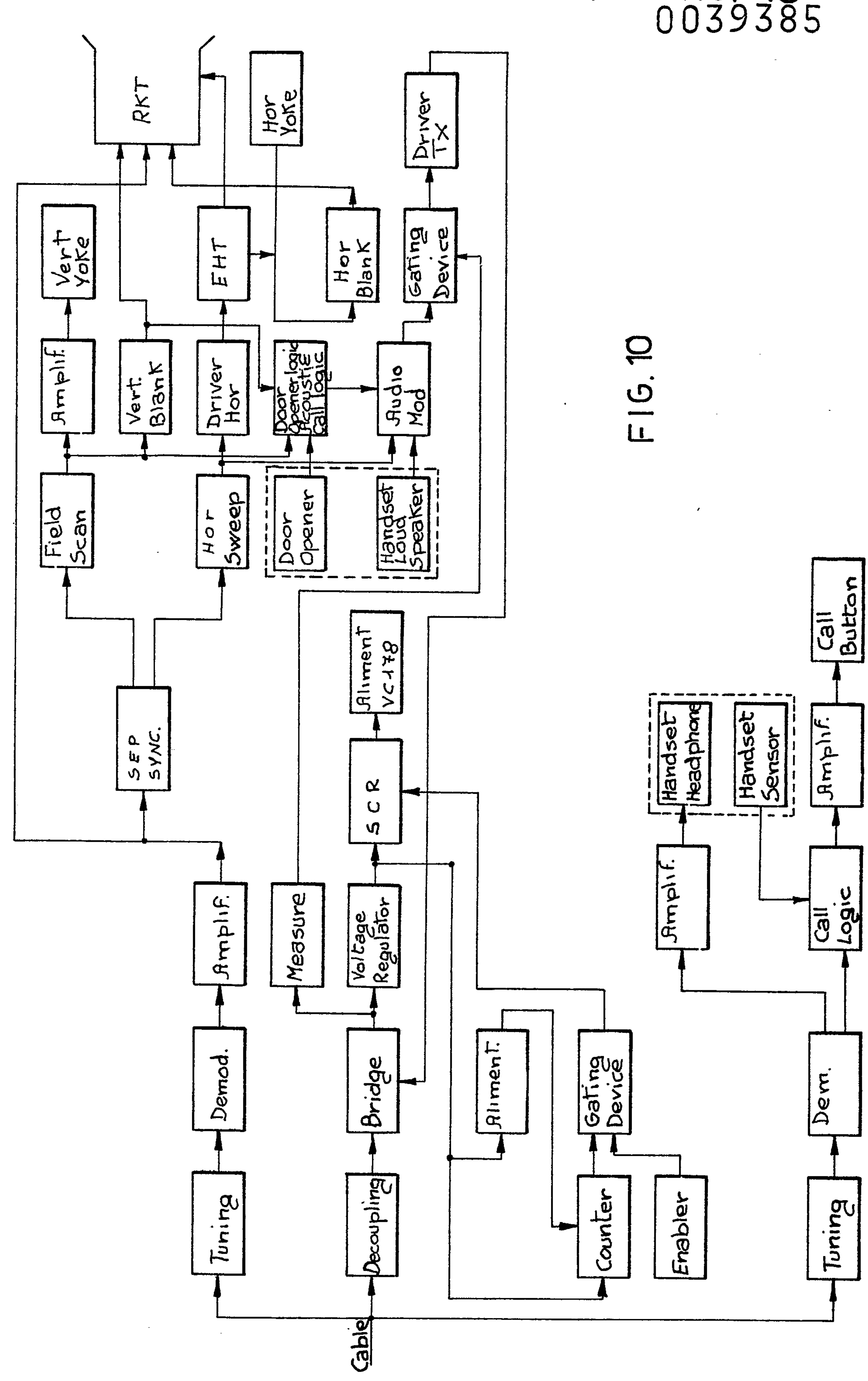


FIG. 10

FIG.11

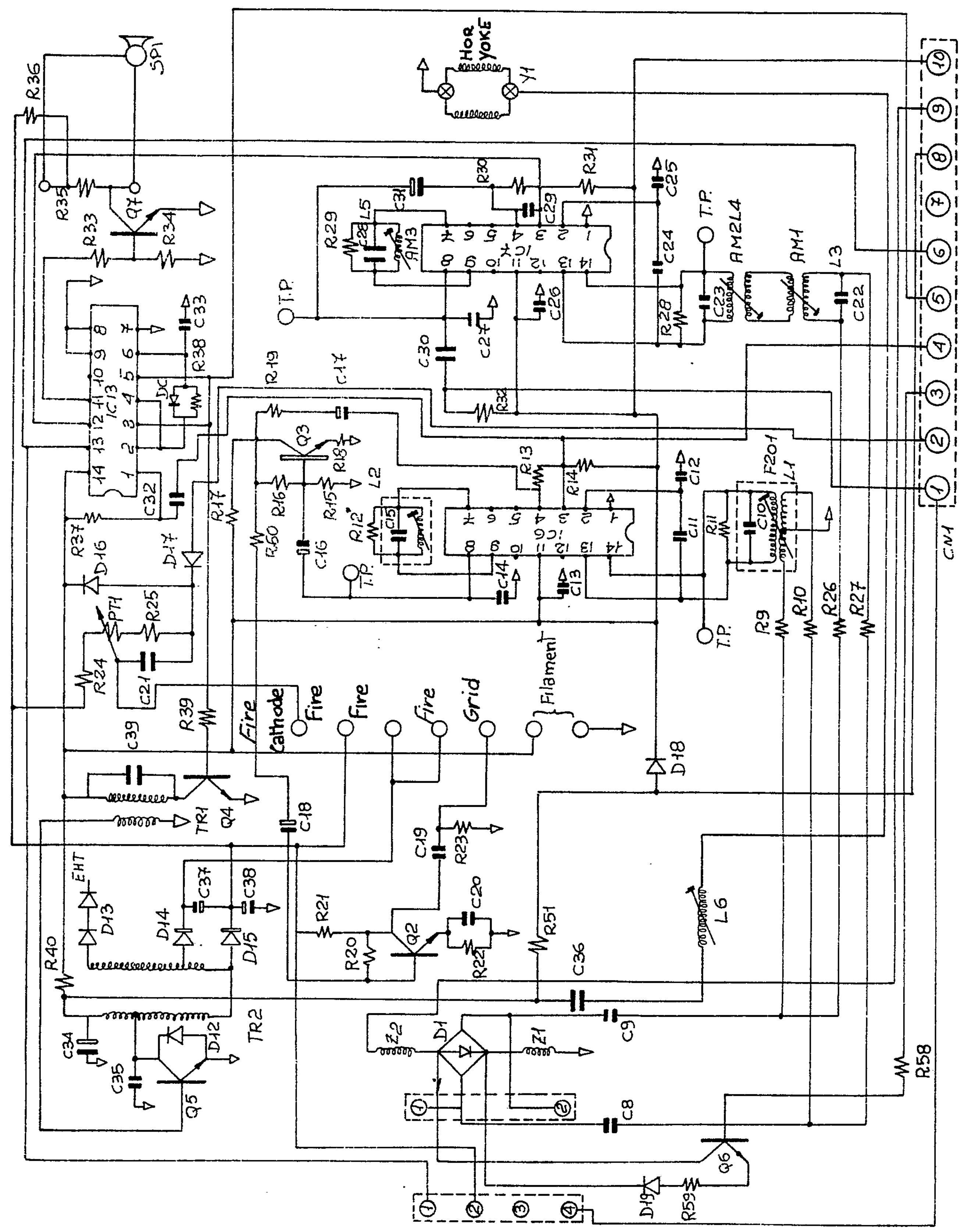
HOR YOKE
SP1
IC13
IC14
IC9
T.P.
AM2L4
AM1
AM3
F201
CN1
Fire
Cathode
Grid
Filament
EHT
TR1
TR2
D18
L6
R58

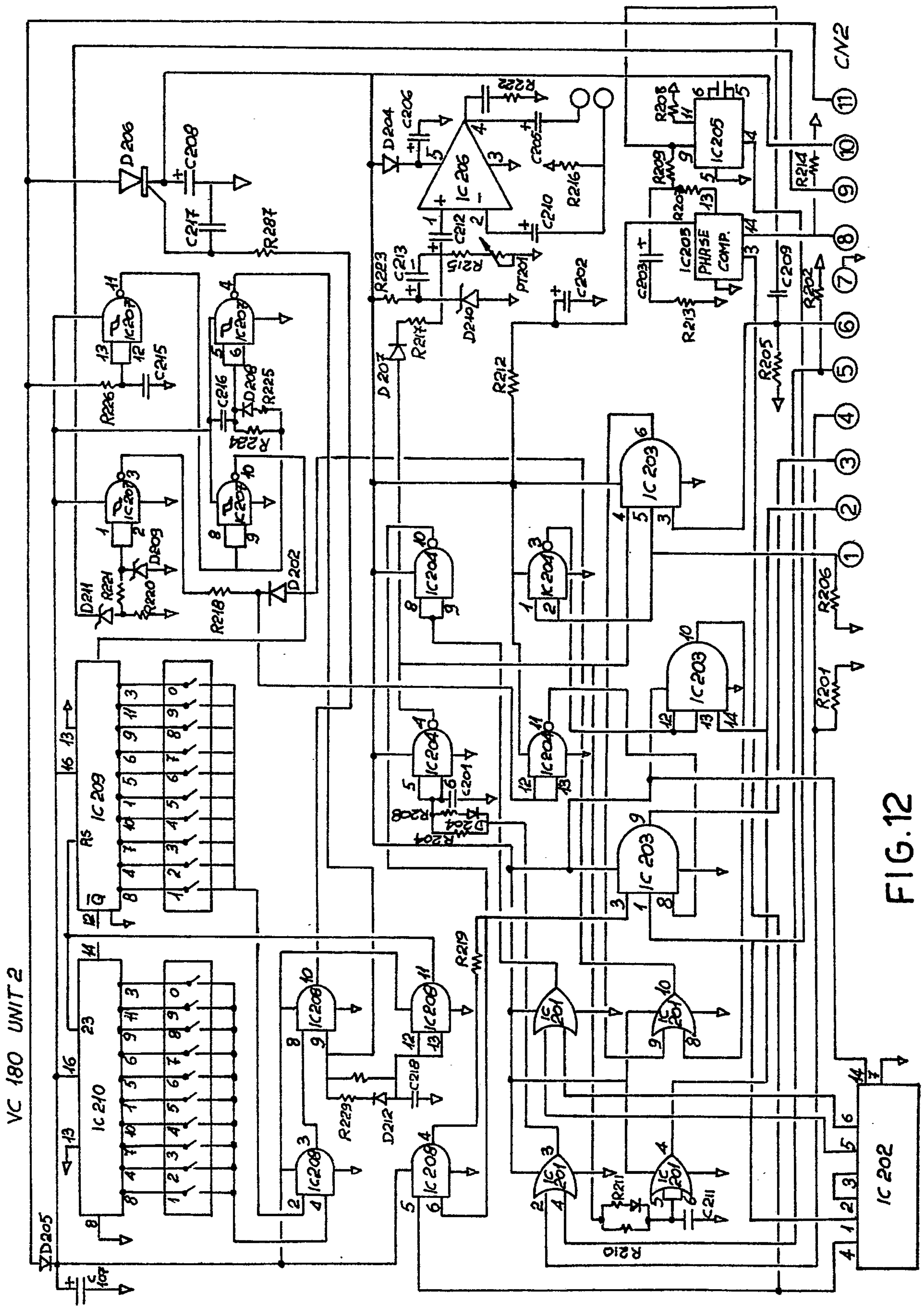


FIG.12

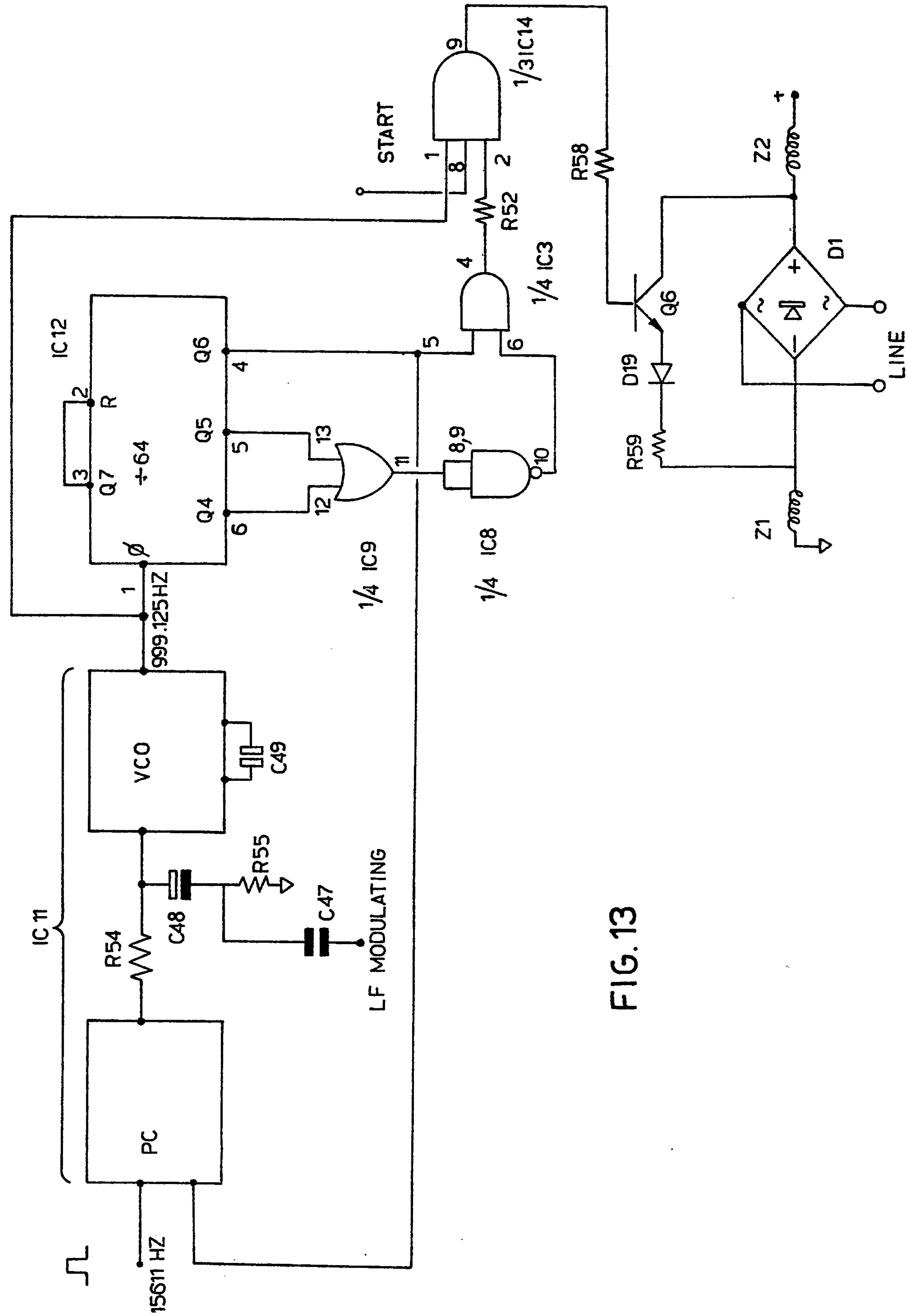
1/3 IC14
START
R58
Z2
R52
1/4 IC3
D1
IC12
LINE
Q6
D19
R59
÷64
1/4 IC9
1/4 IC8
Z1
999.125HZ
VCO
C49
R55
C48
C47
LF MODULATING
IC 11
R54
PC
15611 HZ

FIG. 13

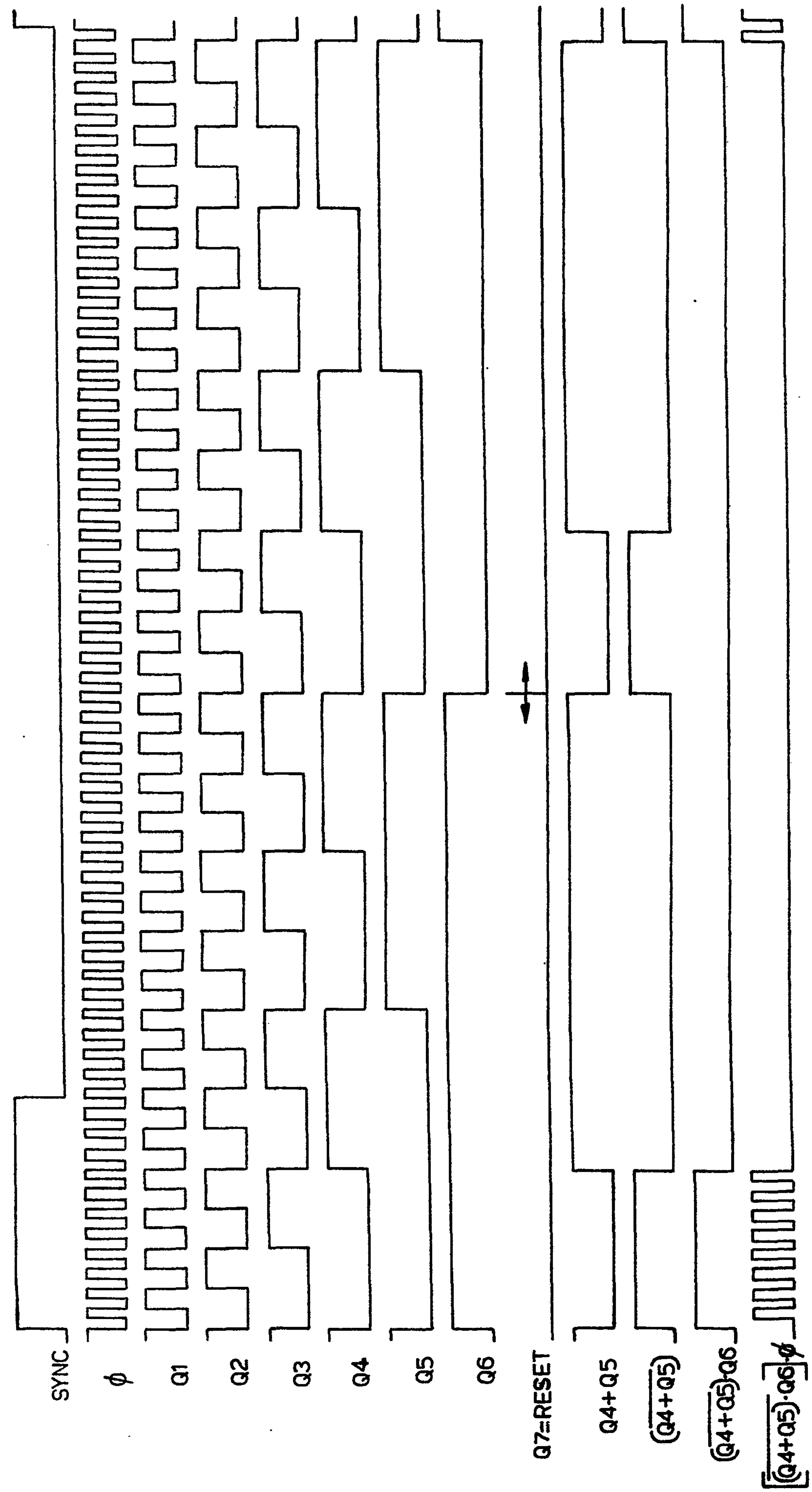


FIG.14

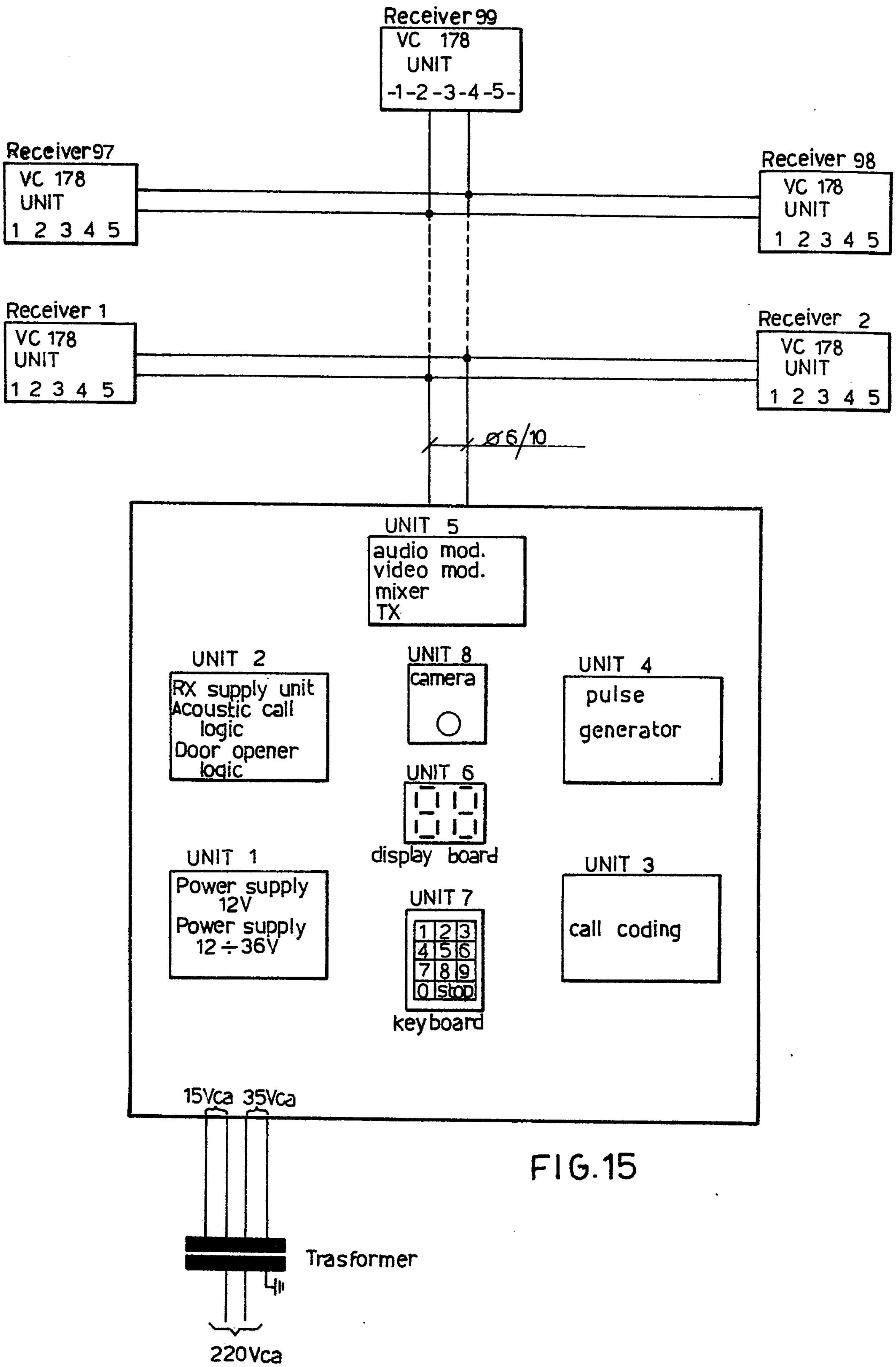
Receiver 99
VC 178
UNIT
-1-2-3-4-5-
Receiver 97
VC 178
UNIT
1 2 3 4 5
Receiver 98
VC 178
UNIT
1 2 3 4 5
Receiver 1
VC 178
UNIT
1 2 3 4 5
Receiver 2
VC 178
UNIT
1 2 3 4 5
ø6/10
UNIT 5
audio mod.
video mod.
mixer
TX
UNIT 2
RX supply unit
Acoustic call logic
Door opener logic
UNIT 8
camera
UNIT 4
pulse generator
UNIT 6
display board
UNIT 1
Power supply 12V
Power supply 12÷36V
UNIT 7
1 2 3
4 5 6
7 8 9
0 Stop
keyboard
UNIT 3
call coding
15Vca 35Vca
Trasformer
220Vca

FIG.15

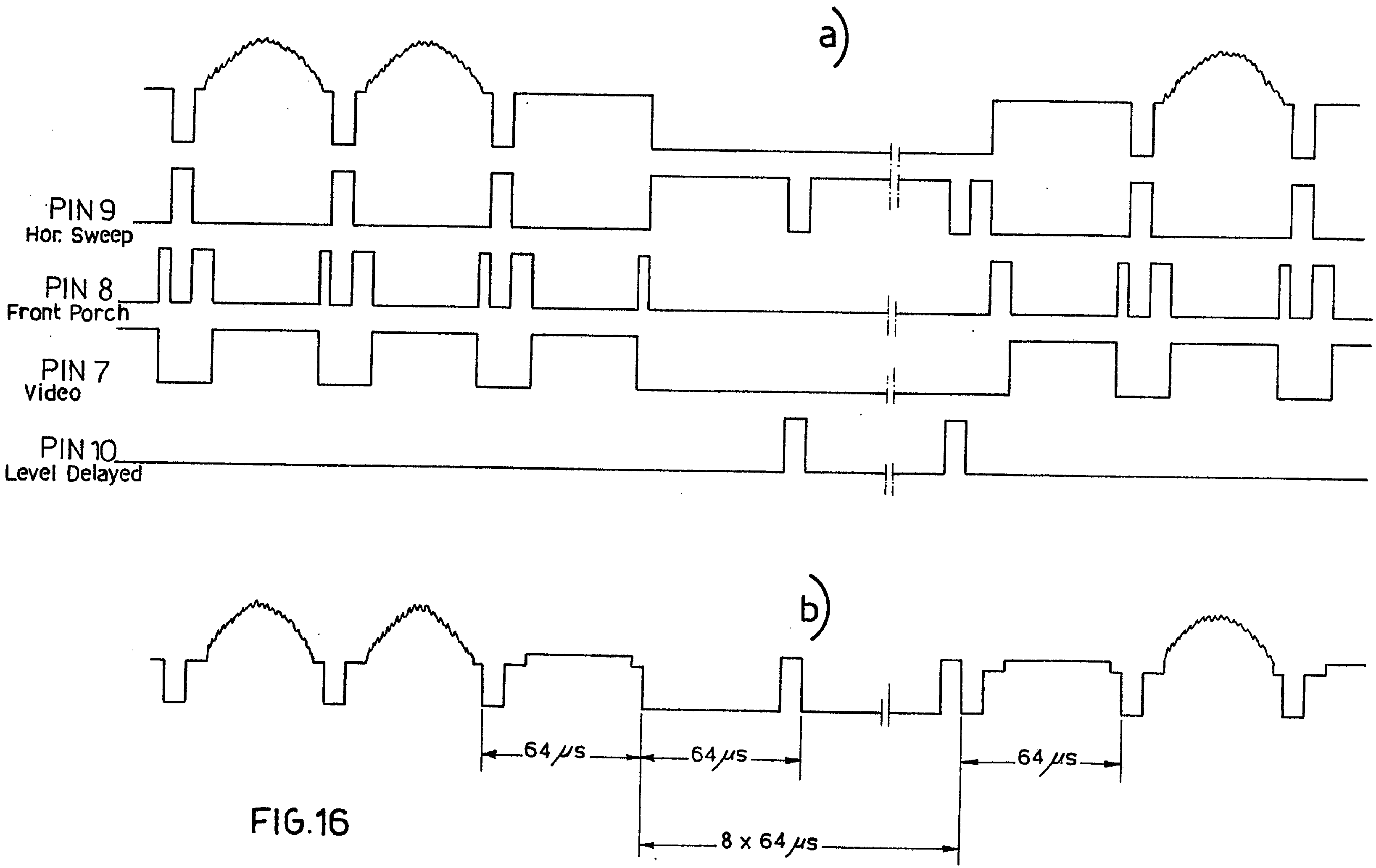
a)
PIN 9
Hor. Sweep
PIN 8
Front Porch
PIN 7
Video
PIN 10
Level Delayed
b)
64 μs
64 μs
64 μs
8 x 64 μs

FIG.16